# EUROPÄISCHE PATENTANMELDUNG

(11) **EP 4 105 514 A1**
(43) Veröffentlichungstag der Anmeldung: **21.12.2022**
(21) Anmeldenummer: 21020324.6
(22) Anmeldetag: 17.06.2021
(51) Int. Cl.: F16F 15/36, H02K 37/08, H02K 37/12, H02K 7/14

(54) **AUTOMATISCHE AUSWUCHTVORRICHTUNG IN KOMPAKTER AXIALER ANORDNUNG**

(71) Anmelder: Hofmann Mess- und Auswuchttechnik GmbH & Co. KG, 64319 Pfungstadt (DE)
(72) Erfinder: Luft, Wolfgang, 64295 Darmstadt (DE); Stork, Michael, 64291 Darmstadt (DE)
(74) Vertreter: Benz, Jürgen

(57) **Zusammenfassung**

Die Erfindung betrifft eine Vorrichtung zum automaischen Auswuchten von rotierenden Bau- und Maschinenteilen, umfassend eine mit konzentrischen, elektromagnetischen Spulenanordnungen ausgestattete Stator-Einheit und mindestens einen Auswuchtring, wobei Stator-Einheit und Auswuchtring, bezogen auf eine Welle der rotierenden Teile, eine axiale und kompakte wie platzsparende Anordnung aufweisen.

Die Erfindung betrifft insbesondere eine entsprechende Auswuchtvorrichtung, welche mit einem Mehrspulen-Stator und mehreren ineinander verschachtelten Auswuchtringen von unterschiedlichem Durchmessern ausgestattet ist.

## Beschreibung

### Gegenstand der Erfindung und Stand der Technik:

Die Erfindung betrifft eine Vorrichtung zum automatischen Auswuchten von rotierenden Bau- und Maschinenteilen. Die Erfindung betrifft insbesondere eine automatische Auswuchtvorrichtung, umfassend eine mit elektromagnetischen Spulenanordnungen ausgestattete Stator-Einheit und mindestens einen Auswuchtring, wobei Stator-Einheit und Auswuchtring, bezogen auf eine Welle der rotierenden Teile, eine axiale Anordnung aufweisen, welche besonders kompakt und platzsparend ist. Die Erfindung betrifft weiterhin eine entsprechende Auswuchtvorrichtung, welche mit einem Mehrspulen-Stator und mehreren ineinander verschachtelten Auswuchtringen von unterschiedlich großen Durchmessern ausgestattet ist.

Von der Unwucht eines Rotors wird gesprochen, wenn seine geometrische Achse nicht mit der Massenträgheitsachse übereinstimmt. Bei der Drehung will der nicht ausgewuchtete Rotor um die Massenträgheitsachse rotieren.

Bei der Herstellung und Montage von Rotoren treten bezüglich der Drehachse häufig Massen-Asymmetrien auf, die im Betrieb eine Zentrifugalkraft in den Lagern erzeugen. Diese Krafteinwirkungen können zu einem erhöhten Verschleiß, hoher Geräuschbelastung oder auch zur Beschädigung und Zerstörung der Maschinen oder deren Bauteile führen. Deshalb werden viele Rotoren vor der Montage auf stationären Auswuchtmaschinen ausgewuchtet, wodurch derartige Unwuchten auf eine zulässige Restunwucht reduziert werden. Allerdings treten auch während und nach dem Einbau der Rotoren in Maschinen oder anderen Geräteteilen noch Veränderungen auf, durch die sich der Auswuchtzustand ändern kann. So können an Rotoren oder deren Lagerungen durch mechanischen Verschleiß, thermische Einflüsse, Anbackungen, Materialverschiebungen oder Massenverlagerungen, Veränderungen am Auswuchtzustand auftreten, die ausgeglichen werden müssen. Dafür sind nach Stand der Technik zahlreiche Auswuchtvorrichtungen und Verfahren zum insbesondere automatischen Auswuchten bekannt, welche standardmäßig eingesetzt werden.

Eine mittlerweile gängige Auswuchtvorrichtung wird in der DE 43 37 001 A1 beschrieben. Dabei umfasst die Vorrichtung fest auf einer rotierenden Welle angeordnete Rotoren mit zwei in axialer Richtung nebeneinander liegenden Auswuchtringen mit ungleichmäßiger Massenverteilung, wobei die Auswuchtringe in Umfangrichtung drehbar sind und mit oberhalb und unterhalb, also hierzu radial angeordneten elektromagnetischen Spulen berührungslos interagieren, welche in einer entsprechend radial angeordneten Stator-Einheit untergebracht sind. Die Auswuchtringe können dabei durch die Magnetspulen so lange verstellt werden, bis ein Massenausgleich erfolgt ist. Ein automatisches Auswuchten kann mit derartigen Vorrichtungen zufriedenstellend durchgeführt werden. Allerdings benötigt man ausreichend Platz für Stator und Auswuchtringe, der nicht immer gegeben ist. Ferner ist es bei dieser Anordnung recht umständlich, wenn die gleiche Vorrichtung für unterschiedlich große auszuwuchtende Komponenten mit unterschiedlich großen Auswuchtringen versehen werden muss.

Bei einer modifizierten und im Stand der Technik angewandten Vorrichtungsvariante (Deissler et al, 2004, 1-2, Werkstatt und Betrieb, Sonderdruck; Neumeuer, Kaufeld, 2008, 7th International Conference on High Speed Machining), welche einen ggf. unzureichenden Platz für die Stator-Einheit direkt am Spindelmantel berücksichtigt, wird der Auswuchtring weiterhin mitdrehend auf dem Werkzeughalter, beispielsweise einer auszuwuchtenden Schleifscheibe, angeordnet und taucht für den eigentlichen Auswuchtvorgang in eine entsprechend geformte Aussparung des Stators ein, der bei dieser Variante an einer platzmäßig geeigneten Stelle im Maschinenraum befestigt ist. Das Einfahren in den Stator kann dabei einfach über die CNC-Achsen der Werkzeugmaschine bewerkstelligt werden. Ein in der Praxis erheblicher Nachteil dieser Lösung ist jedoch, dass im Zwischenraum oder Spalt zwischen Stator und Auswuchtring, der in der Regel etwa 0,5 bis 1,5 mm beträgt, sehr häufig Verunreinigungen, z.B. durch Ansammlung von Späne, etc., entstehen, welche zu Beschädigungen, bis hin zum Ausfall der gesamten Auswuchtvorrichtung führen können.

Es bestand somit die Aufgabe, eine auf dem oben genannten Prinzip basierende Auswuchtvorrichtung zur Verfügung zu stellen, welche jedoch die erwähnten Nachteile nicht aufweist. Überdies soll die erfindungsgemäße Auswuchtvorrichtung in ihrer Anordnung so konzipiert sein, dass sie flexibel in Bezug auf die Verwendung von Auswuchtringen unterschiedlicher Durchmesser eingesetzt werden kann und dabei gleichzeitig kompakt und platzsparend ist.

Die Aufgabe wurde durch die Auswuchtvorrichtung wie im Folgenden und in den Ansprüchen beschrieben, gelöst.

### Zusammenfassung der Erfindung:

Bei den erfindungsgemäßen Auswuchtvorrichtungen sind Stator und Auswuchtring(e) nicht wie weitgehend im Stand der Technik beschrieben, in Bezug auf die rotierende Welle radial zueinander, sondern nebeneinander axial angeordnet.

Gegenstand der Erfindung ist somit eine automatische Auswuchtvorrichtung für eine auszuwuchtende Komponente, welche im Wesentlichen mindestens eine mit konzentrischen, elektromagnetischen Spulenanordnungen ausgestattete Stator-Einheit und mindestens einen Auswuchtring umfasst, welcher zusammen mit einer Welle der auszuwuchtenden Komponente berührungsfrei gegenüber der Stator-Einheit rotiert und mindestens zwei unabhängig voneinander drehbar angeordnete und mit Kompensationsgewichten ausgestattete Auswuchtrotoren aufweist, wobei die Auswuchtrotoren nach dem Prinzip eines Hybrid-Schrittmotors ausgestattet sind und verstellt werden können, wobei die mindestens eine Stator-Einheit (1) und der mindestens eine Auswuchtring (2) in Bezug auf die Drehachse der Welle (5) axial zueinander angeordnet sind.

In einigen Ausführungsformen der Erfindung umfasst die Auswuchtvorrichtung eine einzige Stator-Einheit (1), die mit entsprechenden Spulenanordnungen ausgestattet ist. In einer dieser Ausführungsformen befindet sich die Stator-Einheit (1) zwischen zwei äußeren Auswuchtringen (2)(3), wobei Stator-Einheit und Auswuchtringe axial zur Welle der Vorrichtung angeordnet sind. In diesem Fall, weist jeder der beiden Auswuchtringe vorzugsweise nur einen Auswuchtrotor (2.1) oder (3.1) auf.
In einer bevorzugten Ausführungsform ist die einzige Stator-Einheit jedoch nur mit einem Auswuchtring auf einer Seite, wie unten näher beschrieben, vorgesehen.

In einer weiteren Ausführungsform der Erfindung umfasst die Auswuchtvorrichtung mit Hybrid-Schrittmotor-Antrieb auch zwei axial ausgerichtete Stator-Einheiten (1)(1') zwischen den in axialer Richtung ein Auswuchtring (2) angeordnet ist, welcher in diesem Fall mindestens zwei Auswuchtrotoren (2.1)(2.2) aufweist.

Gegenstand der Erfindung ist insbesondere eine automatische Auswuchtvorrichtung, welche im Wesentlichen eine einzige mit konzentrisch angeordneten elektromagnetischen Spulenanordnungen ausgestattete Stator-Einheit (1) und einen Auswuchtring (2) umfasst, welcher zusammen mit einer Welle (5) der auszuwuchtenden Komponente berührungsfrei gegenüber der Stator-Einheit rotiert und mindestens zwei unabhängig voneinander drehbar angeordnete und mit Kompensationsgewichten ausgestattete Auswuchtrotoren (2.1)(2.2) aufweist. Die Stator-Einheit (19 selbst weist eine geschlossene und eben gestaltete Oberfläche auf und ist einseitig axial gegenüber dem mindestens einen Auswuchtring (2) angeordnet. Der Auswuchtring (2) und die mindestens zwei Auswuchtrotoren (2.1)(2.2) sind gegenüber einer zugehörigen elektromagnetischen Spulenanordnung (1.1.1)(1.1.2) der Stator-Einheit (1) so angeordnet, dass Stator-Einheit und Auswuchtring eine kompakte und im Wesentlichen geschlossene Einheit bilden.

Die um die Welle drehenden Auswuchtrotoren eines Auswuchtringes sind bei dieser Ausführungsform mit einer einzigen Stator-Einheit (1) radial übereinander, also mit unterschiedlichem Durchmesser angeordnet, im Gegensatz zu den beschriebenen Vorrichtungen des Standes der Technik, bei denen die Auswuchtrotoren axial und mit gleichem Durchmesser nebeneinander platziert sind. Dadurch gelingt es, eine kompaktere Bauform mit größerer Flexibilität in Bezug auf die Einsatzmöglichkeiten der Auswuchtvorrichtung zu ermöglichen. Der Auswuchtring (2) rotiert zusammen mit der Welle (5) der auszuwuchtenden Komponente, beispielsweise eine Schleifscheibe, berührungsfrei gegenüber der einzigen Stator-Einheit (1) und weist zwei unabhängig voneinander drehbar angeordnete und mit Kompensationsgewichten (2.1.2)(2.2.2) ausgestattete Auswuchtrotoren (2.1)(2.2) auf.

In einer speziellen erfindungsgemäßen Ausführungsform umfasst die Auswuchtvorrichtung eine Stator-Einheit (1), welche auf einer Seite zwei oder mehr, beispielsweise zwei, drei oder vier Auswuchtringen (2)(3)(4) gegenüberliegen, wobei die einzelnen Auswuchtringe unterschiedliche Durchmesser aufweisen und nunmehr radial übereinander angeordnet sind, ebenso wie die Auswuchtrotoren (2.1)(2.2)(3.1)(3.2)(4.1)(4.2) eines jeden Auswuchtringes. Die Auswuchtringe liegen dabei erfindungsgemäß in einer Bauform vor, die es ermöglicht, dass sie platzsparend ineinander versenkt oder verschachtelt und so hinsichtlich Baugröße, Kapazität und Drehzahl für die auszuwuchtende Komponente optimiert werden können.

In allen erfindungsgemäßen Ausführungsformen weist die Stator-Einheit (1) eine oder mehrere elektromagnetische Ringspulen oder eine Anordnung von konzentrisch angeordneten Einzelspulen auf, wobei für jeden Auswuchtrotor (2.1)(2.2) usw. eine Spulenanordnung vorgesehen ist, welche dem betreffenden Auswuchtrotor berührungslos und mit einem geringen Abstand (sog. Spalt) gegenüberliegt. Da wie erwähnt, die üblicherweise zwei Auswuchtrotoren (2.1)(2.2) erfindungsgemäß radial übereinander im jeweiligen Auswuchtring (2) angeordnet sind, müssen demnach auch die zuständigen Spulen-Anordnungen (1.1.1)(1.1.2) an der entsprechenden Position radial übereinander angeordnet sein, so dass der Umfang des Auswuchtrotors gegenüber dem Umfang der konzentrischen Spulenanordnung zu liegen kommt.

Das Verstellen der Auswuchtrotoren kann nach verschiedenen Wirkprinzipien erfolgen, zum Beispiel als Wirbelstrombremse nach dem Kurzschlussläuferprinzip, oder als Schrittmotor. Mit Hilfe des gewählten physikalischen Effektes werden die Auswuchtrotoren mit den Kompensationsgewichten so verstellt, dass die Unwucht der auszuwuchtenden Komponente beseitigt ist. Dabei hat sich der Einsatz eines Schrittmotors als besonders vorteilhaft erwiesen.

Schrittmotore können als Reluktanzschrittmotor, mit verzahntem Rotor aus Weicheisen, oder als Permanentmagnetschrittmotor mit Stator aus Weicheisen und Rotor aus Permanentmagneten, ausgeführt werden. Der Hybrid Schrittmotor ist eine Kombination beider Bauformen und nutzt deren Vorteile.

Die detaillierte Ausführung der Auswuchtrotoren als Hybrid Schrittmotor gemäß der Erfindung hat somit signifikante Vorteile. Durch die auf einem möglichst großen Durchmesser angeordneten Permanentmagneten, können die Auswuchtrotoren extrem winkellagenstabil ausgeführt werden. Dadurch kann ein hohes magnetisches Haltemoment erzeugt und das Durchrutschen bei Beschleunigungs- und Bremsvorgängen vermieden werden. Bei der axialen Anordnung von Stator-Einheit und Auswuchtring ist der Hybrid Schrittmotor besonders kompakt bauend ausführbar, bei relativ hohen magnetischen Haltekräften.

Gegenstand der Erfindung ist ferner und unabhängig vom Antriebssystem eine automatische Auswuchtvorrichtung für eine auszuwuchtende Komponente, im Wesentlichen umfassend vorzugsweise eine mit konzentrischen, elektromagnetischen Spulenanordnungen ausgestattete Stator-Einheit und mindestens einen Auswuchtring, welcher zusammen mit einer Welle der auszuwuchtenden Komponente berührungsfrei gegenüber der Stator-Einheit rotiert und mindestens zwei unabhängig voneinander drehbar angeordnete und mit Kompensationsgewichten ausgestattete Auswuchtrotoren aufweist. Die Stator-Einheit (1) weist eine geschlossene und eben gestaltete Oberfläche auf und ist einseitig axial gegenüber dem mindestens einen Auswuchtring (2) angeordnet. Die mindestens zwei Auswuchtrotoren (2.1)(2.2) des mindestens einen Auswuchtringes sind dabei übereinander, mit unterschiedlichen Durchmessern gegenüber einer zugehörigen elektromagnetischen Spulenanordnung (1.1.1)(1.1.2) der Stator-Einheit (1) so angeordnet, dass Stator-Einheit (1) und Auswuchtring (2) eine kompakte und im Wesentlichen geschlossene Einheit bilden.

In einer Ausführungsform weist die Auswuchtvorrichtung diesen Typs eine einzige Stator-Einheit (1) auf, welcher zwei oder mehr Auswuchtringen (2)(3) gegenüberliegen, wobei die zwei oder mehr Auswuchtringe (2)(3) unterschiedliche Durchmesser aufweisen und eine Bauform besitzen, mit der sie platzsparend ineinander versenkt oder verschachtelt werden können, so dass sie hinsichtlich Baugröße, Kapazität und Drehzahl für die auszuwuchtende Komponente optimierbar sind. Dabei nehmen bevorzugt die ineinander versenkt oder verschachtelten Auswuchtringe (2)(3) eine geschlossen kompakte Bauform ein. Gegenstand der Erfindung ist schließlich auch die Verwendung der besagten Auswuchtvorrichtung zum automatischen Auswuchten von rotierenden Maschinen- und Bauteilen, insbesondere Schleifscheiben, unter Vermeidung von Beschädigungen der Vorrichtung durch Verschmutzung während des Betriebes.

### Einzelheiten der Erfindung und Beschreibung der Zeichnungen

Liste Bezugszeichen im Text und den Zeichnungen:
- 1,1':: Stator-Einheit
- 1.1.1: elektromagnetische Spulenanordnung gegenüber Auswuchtrotor 2.1
- 1.1.2: elektromagnetische Spulenanordnung gegenüber Auswuchtrotor 2.2
- 1.2.1: elektromagnetische Spulenanordnung gegenüber Auswuchtrotor 3.1
- 1.2.2: elektromagnetische Spulenanordnung gegenüber Auswuchtrotor 3.2
- 1.3.1: elektromagnetische Spulenanordnung gegenüber Auswuchtrotor 4.1
- 1.3.2: elektromagnetische Spulenanordnung gegenüber Auswuchtrotor 4.2
- 2, 3, 4:: Auswuchtring(e)
- 2.1:: 1. Auswuchtrotor des Auswuchtringes (2)
- 2.2:: 2. Auswuchtrotor des Auswuchtringes (2)
- 2.1.1 :: Lager Auswuchtrotor (2.1)
- 2.1.2:: Kompensationsgewicht Auswuchtrotor (2.1)
- 2.2.1 :: Lager Auswuchtrotor (2.2)
- 2.2.2:: Kompensationsgewicht Auswuchtrotor (2.2)
- 3.1:: 1. Auswuchtrotor des Auswuchtringes (3)
- 3.2:: 2. Auswuchtrotor des Auswuchtringes (3)
- 4.1:: 1. Auswuchtrotor des Auswuchtringes (4)
- 4.2:: 2. Auswuchtrotor des Auswuchtringes (4)
- 5:: drehende Welle, die mit der auszuwuchtenden Komponente verbunden ist
- 6:: Maschinengehäuse
- 7:: Lager/Kugellager Auswuchtrotoren, entspricht Lager (2.1.1) bzw. (2.2.1), usw.
- 8:: Spalt zwischen Stator und Auswuchtring, bzw. Auswuchtrotoren
- 9:: Spindellager

Unter dem Ausdruck "Auswuchtring" wird erfindungsgemäß die rotierende Komponente des automatischen Auswuchtsystems verstanden, welche mit einer Welle des auszuwuchtenden Körpers umläuft. Ein Auswuchtring beinhaltet mindestens und vorzugsweise zwei Auswuchtrotoren, die voneinander unabhängig relativ in der Winkellage verschiebbar angeordnet sind. Hierfür sind sie gegenüber der Welle des auszuwuchtenden Körpers durch Lager, beispielsweise Gleit- oder Wälzlager, entkoppelt. Die Auswuchtrotoren sind einseitig mit Kompensationsgewichten bestückt. Das Kompensationsgewicht erzeugt, multipliziert mit seinem Winkelabstand zur Drehachse der Welle, die Kompensationsunwucht. Die Kapazität des Auswuchtringes ergibt sich aus der Summe der Kompensationsunwuchten.

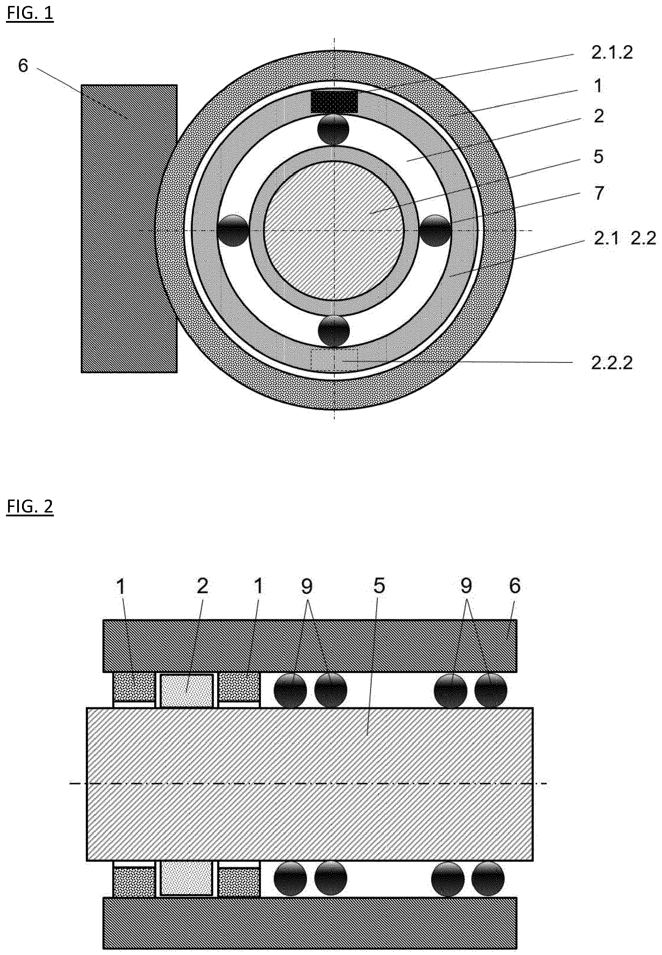

Fig. 1 zeigt eine schematische Darstellung einer Auswuchtvorrichtung des Standes der Technik im Querschnitt, bei welcher Stator (1) und Auswuchtring (2) zueinander radial in Bezug auf die rotierenden Welle (5) angeordnet sind. Dabei ist die außen liegende Stator-Einheit am Maschinengehäuse (6) angebracht. Die Welle (5) dreht sich über Kugellager (7) gegenüber dem Gehäuse. Im vorliegenden Beispiel ist die Stator-Einheit ein äußerer konzentrischer Ring (1), der mit dem Maschinengehäuse (6) verbunden ist, und gegenüber dem innenliegenden Auswuchtring (2) angeordnet ist. Der Auswuchtring (2) rotiert mit der Welle (5). Der Auswuchtring (2) umfasst zwei Auswuchtrotoren (2.1) und (2.2), die hintereinander entlang der Welle (5) ((2.2) in der Zeichnung verdeckt) angeordnet sind und die Kompensationsgewichte (2.1.2) und (2.2.2) aufweisen. Nicht gezeigt, ist hier das Spulenpaar (1.1.1)(1.1.2), welches in die ringförmige Stator-Einheit (1) integriert ist.

Fig. 2 zeigt eine schematische Darstellung einer Auswuchtvorrichtung im Längsschnitt mit axialer Anordnung von Stator-Einheit und Auswuchtring, so wie sie bei der erfindungsgemäßen Auswuchtvorrichtung zum Einsatz kommt. Im konkreten Beispiel ist ein Auswuchtring (2), der mit der Welle (5) dreht, zwischen zwei Stator-Einheiten (1) angeordnet. Stator-Einheit und Auswuchtring und damit auch die Auswuchtrotoren (2.1)(2.2) (nicht gezeigt) sind somit axial nebeneinander angeordnet.

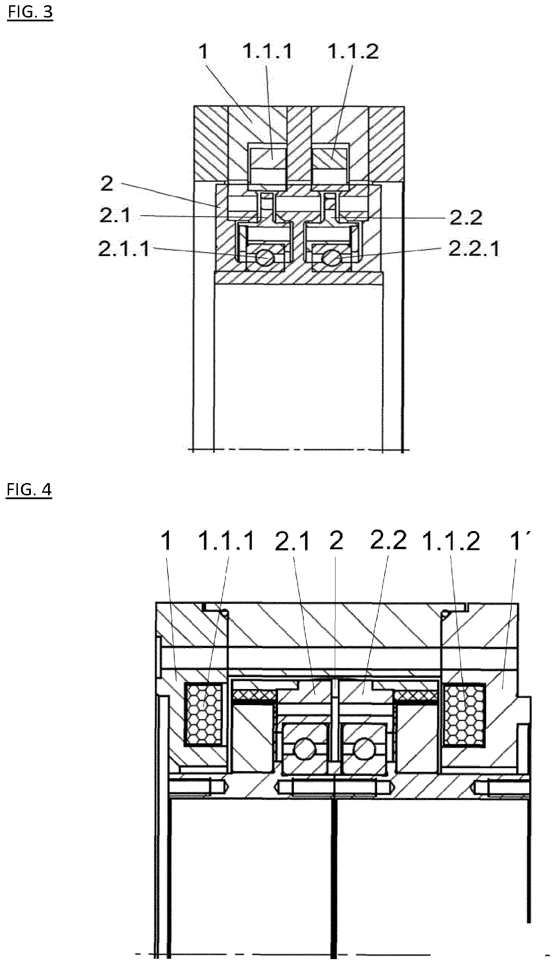

Fig. 3 zeigt wiederum eine radiale Anordnung einer Auswuchtvorrichtung von einer Stator-Einheit und einem Auswuchtring gemäß des Standes der Technik im Detail. Der Auswuchtring (2) wird von zwei Auswuchtrotoren (2.1) und (2.2) gebildet, welche über die Lager (2.1.1) und (2.2.1) auf einer Welle (nicht gezeigt) drehbar angeordnet sind. Die beiden Auswuchtrotoren, welche mit Kompensationsgewichten versehen sind, haben identische Durchmesser und sind nebeneinander angeordnet. Die Stator-Einheit (1) mit den konzentrisch angeordneten Spulen (1.1.1)(1.1.2) ist hierzu radial unmittelbar gegenüber den Rotoren angeordnet; umschließt also berührungslos den innen angeordneten Auswuchtring (2). Jedem der beiden Auswuchtrotoren ist somit eine sie von außen umschließende Spulenanordnung in Form einer Ringspule oder einer ringförmigen Anordnung von Einzelspulen zugeordnet.

Eine modifizierte und im Stand der Technik oft eingesetzte Variante dieser in Fig. 3 gezeigten Vorrichtung mit radialer Anordnung (hier nicht gezeigt) bietet sich an, wenn für einen Stator kein Platz im Spindelmantel vorhanden ist. Der Auswuchtring wird hierbei weiterhin mitdrehend angeordnet, zum Beispiel auf dem Werkzeughalter einer Schleifscheibe, aber taucht erst für den Auswuchtvorgang in die Stator-Einheit ein, welche an einer besser geeigneten Stelle im Maschinenraum befestigt ist. Das Einfahren in die Stator-Einheit kann dabei einfach über die CNC-Achsen der Werkzeugmaschine realisiert werden. Ein großer Nachteil dieser an sich platzsparenden Anordnung besteht darin, dass sich im notwendigen kleinen radialen Spalt (0,5 - 1,5 mm) zwischen Stator-Einheit und dem Auswuchtring, bzw. den Auswuchtrotoren, Verunreinigungen und Abriebmaterial (z.B. Späne) ansammeln können, wodurch das Auswuchtsystem Beschädigungen und sogar Ausfälle erfahren kann.

Fig. 4 zeigt eine Auswuchtvorrichtung gemäß der Erfindung mit Hybrid-Schrittmotor-Antrieb, bei der zwei getrennt angeordnete Stator-Einheiten (1)(1') einen hierzu mittig und axial angeordneten Auswuchtring (2) mit zwei Auswuchtrotoren (2.1)(2.2) umschließen, wobei der Auswuchtrotor (2.1) der Spuleneinheit (1.1.1) und der Auswuchtrotor (2.2) der Spuleneinheit (1.1.2) gegenüberliegt und jeweils ihr funktionell zugeordnet und somit verstellbar ist.

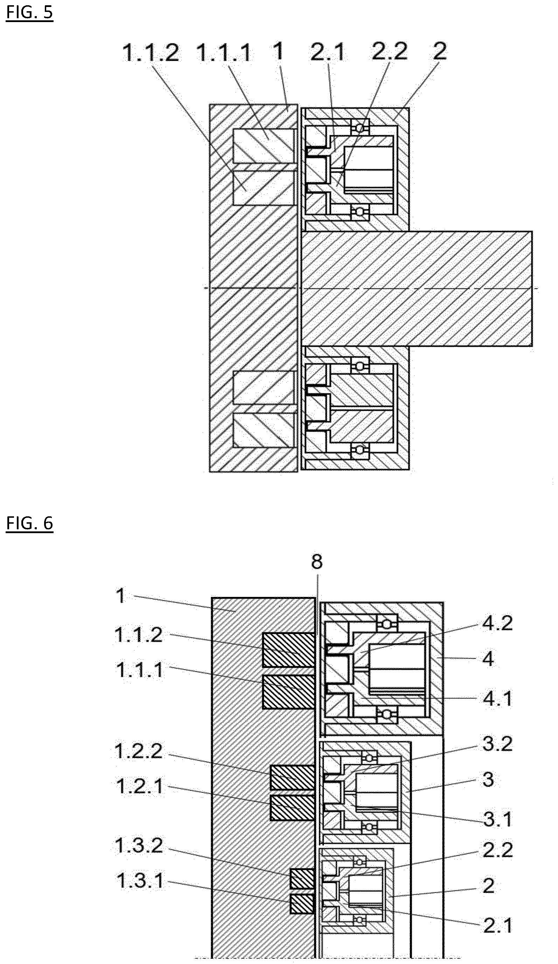

Fig. 5 beschreibt eine erfindungsgemäße Ausführungsform der Erfindung, bei der eine Stator-Einheit und ein Auswuchtring mit vorzugsweise zwei Auswuchtrotoren axial zueinander (bezogen auf die rotierende Welle) angeordnet sind.

Erfindungsgemäß sind die beiden Auswuchtrotoren (2.1)(2.2) nunmehr übereinander, also zueinander radial angeordnet, weisen also im Unterschied zu den gängigen Vorrichtungen des Standes der Technik einen unterschiedlichen Durchmesser auf.

Die beiden Auswuchtrotoren sind also so angeordnet, dass sie selbst eine sehr kompakte Bauform annehmen können. Die Stator-Einheit (1) liegt axial diesem so gestalteten Auswuchtring (2) unmittelbar gegenüber, wobei es nun möglich ist, die Auswuchtrotoren (2.1)(2.2) des Auswuchtringes mit entsprechend gegenüber diesen platzierten und in der Spulen-Einheit integrierten elektromagnetischen Spulen-Anordnungen interagieren zu lassen. Analog zur Anordnung der Auswuchtrotoren stehen so, durch einen Spalt voneinander getrennt, eine äußere konzentrisch angeordnete Spulenanordnung (1.1.1) mit einem größeren Durchmesser dem größeren Auswuchtrotor (2.1) gegenüber, und eine innere konzentrisch angeordnete Spulenanordnung (1.1.2) mit einem kleineren Durchmesser steht dem kleineren Auswuchtrotor (2.2) gegenüber.

Dadurch können Spulen und Auswuchtrotoren nunmehr auf engstem Raum miteinander funktionell in Kontakt treten und interagieren. Ein Eintauchen des Auswuchtringes in die Stator-Einheit, wie dies nach dem Stand der Technik bislang notwendig war um Platz zu sparen, kann somit entfallen.

Stator-Einheit (1) und Auswuchtring (2) mit seinen beiden Auswuchtrotoren (2.1)(2.2) können so in einer äußerst kompakten und platzsparenden Bauweise mit ebenen Oberflächen zur Verfügung gestellt werden. Die Notwendigkeit eines aufwendigen Sauberhaltens der Vorrichtung zwischen einzelnen Betriebsvorgängen entfällt und kann durch einfache Maßnahmen, wie beispielsweise durch eine Wischervorrichtung, die während des Betriebes agiert, ersetzt werden.

Die Verstellung der Auswuchtrotoren (2.1) und (2.2) mit ihren Kompensationsgewichten (hier nicht gezeigt) erfolgt vorzugsweise nach dem Schrittmotor-Prinzip.

Die dargestellte Auswuchtvorrichtung kann natürlich nicht nur horizontal sondern auch vertikal oder unter einem bestimmten Winkel, je nach Erfordernis der Werkzeugmaschine angeordnet und eingesetzt werden.

Fig. 6 zeigt eine besonders vorteilhafte Ausführungsform der hier vorgestellten und oben beschriebenen Auswuchtvorrichtung in kompakter axialer Anordnung:
Bei Schleifmaschinen-Anwendungen wird oft das automatische Auswuchten einer hohen Anzahl von sehr unterschiedlich großen und schweren Schleifscheiben gefordert. Das ist mit den bekannten Anordnungen nur bis zu einem gewissen Grad realisierbar, da sowohl die benötigten Auswuchtkapazitäten als auch die Betriebsdrehzahlen der Schleifscheiben sehr unterschiedlich sein können-und das Auswuchtsystem aus geometrischen, maschinendynamischen, oder auch betrieblichen Gründen nicht unbegrenzt und universell gestaltet werden kann. Die erfindungsgemäße axiale Anordnung zwischen Stator und Auswuchtring erlaubt es nun, eine Vorrichtung bereitzustellen, bei der Stator-Spulenanordnungen unterschiedlicher Größe und Durchmesser in nur einem Stator-Gehäuse konzentrisch angeordnet sind. Diese stehen mehreren radial zueinander angeordneten, ineinander geschobenen oder geschachtelten Auswuchtringen von unterschiedlicher Größe und Durchmesser gegenüber, wobei jeder Auswuchtring mit mindestens zwei Auswuchtrotoren versehen ist, welche, wie oben beschrieben, ebenfalls radial zueinander angeordnet und von unterschiedlichem Durchmesser sind. Mit diesem Prinzip können so verschieden große Auswuchtrotoren betrieben werden, deren Ausführungen hinsichtlich Baugröße, Kapazität und Drehzahl für die jeweilige auszuwuchtende Komponente, beispielsweise Schleifscheiben, optimiert werden können.

Die Abbildung zeigt schematisch linksseitig einen Stator (1) mit drei Spulenpaar-Anordnungen (1.1.1)(1.1.2), (1.2.1)(1.2.2) sowie (1.3.1)(1.3.2). Die ringförmigen Anordnungen sind konzentrisch angeordnet, wobei jedes Spulenpaar eine größere und eine kleinere RingAnordnung umfasst. Der Ring mit dem größten Durchmesser wird von dem Spulenpaar (1.1.1)(1.1.2) gebildet. Das Spulenpaar (1.2.1)(1.2.2) weist einen kleineren Durchmesser auf, während das Spulenpaar (1.3.1)(1.3.2) den kleinsten Ring bildet. Die Spulen-Anordnung (1.1.1) ist funktionell dem Auswuchtrotor (4.1) des Auswuchtringes (4) zugeordnet, während die Spulen-Anordnung (1.1.2) funktionell mit dem Auswuchtrotor (4.2) des Auswuchtringes (4) interagiert. Analog ist die Spulen-Anordnung (1.2.1) funktionell dem Auswuchtrotor (3.1) des Auswuchtringes (3) zugeordnet, während die Spulen-Anordnung (1.2.2) funktionell mit dem Auswuchtrotor (3.2) des Auswuchtringes (3) interagiert. Entsprechendes gilt für die Spulenpaar-Anordnung (1.3.1)(1.3.2).

Die Auswuchtringe (2)(3)(4) haben Aussparungen, die so gestaltet sind, dass sie passend ineinander versenkt bzw. eingeschoben werden können, und so eine kompakte und platzsparende Einheit mit ebenen Oberflächen bilden. Jeder Auswuchtring weist, wie beschrieben, entsprechend platzierte Auswuchtrotoren-Paare (2.1)(2.2), (3.1)(3.2) und (4.1)(4.2) auf, welche durch einen Spalt (8) von der jeweils entsprechenden gegenüberliegenden Spulenpaar-Anordnung getrennt sind.

Mit der gezeigten Anordnung können also unterschiedlich große auszuwuchtende Komponenten, z.B. Schleifscheiben unmittelbar hintereinander ohne Umbaumaßnahmen mit der Auswuchtvorrichtung ausgewuchtet werden. Dies ist ein großer Vorteil gegenüber allen anderen bisher eingesetzten Auswuchtvorrichtungen.

Selbstverständlich kann diese Anordnung nicht nur, wie gezeigt, horizontal sondern auch vertikal oder unter einem Winkel, z.B. 45°, betrieben werden, falls dies bauseitig oder prozesstechnisch Vorteile haben sollte.

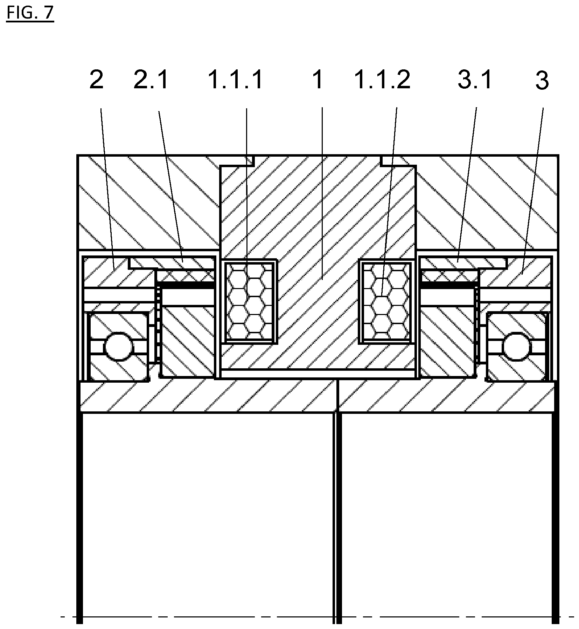

Fig. 7 zeigt eine erfindungsgemäße Auswuchtvorrichtung, welche nach dem Prinzip des Hybrid-Schrittmotors betrieben wird und der Vorrichtung aus Fig.4 ähnlich ist. Jedoch ist bei dieser Ausführungsform nur eine Stator-Einheit (1) vorgesehen, welche mittig und in axialer Ausrichtung zwischen zwei Auswuchtringen (2) und (3) angeordnet ist. Die beiden äußeren Auswuchtringe (2)(3) umfassen jeweils nur einen Auswuchtrotor (2.1)(3.1), der durch die jeweilige gegenüberliegende Spulenanordnung (1.1)(1.2) in der mittig platzierten Spulen-Einheit (1) verstellt werden kann.

## Patentansprüche

1. Automatische Auswuchtvorrichtung für eine auszuwuchtende Komponente, im Wesentlichen umfassend mindestens eine mit konzentrischen, elektromagnetischen Spulenanordnungen ausgestattete Stator-Einheit und mindestens einen Auswuchtring, welcher zusammen mit einer Welle der auszuwuchtenden Komponente berührungsfrei gegenüber der Stator-Einheit rotiert und mindestens zwei unabhängig voneinander drehbar angeordnete und mit Kompensationsgewichten ausgestattete Auswuchtrotoren aufweist, wobei die Auswuchtrotoren nach dem Prinzip eines Hybrid-Schrittmotors ausgestattet sind und verstellt werden,
**dadurch gekennzeichnet, dass** die mindestens eine Stator-Einheit (1) und der mindestens eine Auswuchtring (2) in Bezug auf die Drehachse der Welle (5) axial zueinander angeordnet sind.

2. Automatische Auswuchtvorrichtung nach Anspruch 1, **dadurch gekennzeichnet, dass** sie eine einzige Stator-Einheit (1) umfasst, welche eine geschlossene und eben gestaltete Oberfläche aufweist und einseitig-axial gegenüber mindestens einem Auswuchtring (2) angeordnet ist, der mindestens zwei Auswuchtrotoren (2.1)(2.2) umfasst, welche übereinander mit unterschiedlichen Durchmessern gegenüber einer zugehörigen elektromagnetischen Spulenanordnung (1.1.1)(1.1.2) der Stator-Einheit (1) so angeordnet sind, dass die einzige Stator-Einheit (1) und der Auswuchtring (2) eine kompakte und im Wesentlichen geschlossene Einheit bilden.

3. Automatische Auswuchtvorrichtung nach Anspruch 2, **dadurch gekennzeichnet, dass** zwei oder mehr Auswuchtringen (2)(3) der einzigen Stator-Einheit (1) gegenüberliegen, wobei die zwei oder mehr Auswuchtringe (2)(3) unterschiedliche Durchmesser aufweisen und eine Bauform besitzen, mit der sie platzsparend ineinander versenkt oder verschachtelt werden können, so dass sie hinsichtlich Baugröße, Kapazität und Drehzahl für die auszuwuchtende Komponente optimierbar sind.

4. Automatische Auswuchtvorrichtung nach Anspruch 3, **dadurch gekennzeichnet, dass** die ineinander versenkt oder verschachtelten Auswuchtringe (2)(3) eine geschlossen kompakte Bauform einnehmen.

5. Automatische Auswuchtvorrichtung nach Anspruch 3 oder 4, **dadurch gekennzeichnet, dass** jedem Auswuchtring (2) eine ringförmige Spulenanordnung (1.1.1)(1.1.2) zuzuordnen ist, deren Durchmesser im Wesentlichen den Durchmessern der zugehörigen gegenüberliegenden Auswuchtrotoren (2.1)(2.2) entspricht.

6. Automatische Auswuchtvorrichtung nach Anspruch 1, **dadurch gekennzeichnet, dass** sie eine einzige Stator-Einheit (1) umfasst, welche eine geschlossene und eben gestaltete Oberfläche aufweist und in der Mitte zwischen zwei axial gegenüberliegenden äußeren Auswuchtringen (2)(3) angeordnet ist, wobei der Auswuchtring (2) mindestens einen Auswuchtrotor (2.1) und der Auswuchtring (3) mindestens einen Auswuchtrotor (3.1) umfasst, und die besagten Auswuchtrotoren gegenüber einer zugehörigen elektromagnetischen Spulenanordnung (1.1.1)(1.1.2) der mittig platzierten Stator-Einheit (1) so angeordnet sind, dass die Stator-Einheit (1) und der jeweilige äußere Auswuchtring (2)(3) eine kompakte und im Wesentlichen geschlossene Einheit bilden

7. Automatische Auswuchtvorrichtung nach Anspruch 1, **dadurch gekennzeichnet, dass** sie zwei Stator-Einheiten (1)(1') umfasst, welche eine geschlossene und eben gestaltete Oberfläche aufweisen und axial zueinander ausgerichtet sind und zwischen denen in axialer Richtung ein Auswuchtring (2) angeordnet ist, der mindestens zwei Auswuchtrotoren (2.1)(2.2) umfasst, welche gegenüber einer zugehörigen elektromagnetischen Spulenanordnung (1.1.1)(1.1.2) der jeweiligen äußeren Stator-Einheit (1)(1') so angeordnet sind, dass die beiden Stator-Einheiten (1)(1') und der mittig angeordnete Auswuchtring (2) eine kompakte und im Wesentlichen geschlossene Einheit bilden.

8. Automatische Auswuchtvorrichtung nach einem der Ansprüche 1 - 7, **dadurch gekennzeichnet, dass** der mindestens eine Auswuchtring (2) zwei Auswuchtrotoren (2.1)(2.2) aufweist.

9. Automatische Auswuchtvorrichtung nach einem der Ansprüche 1 - 8, **dadurch gekennzeichnet, dass** jedem Auswuchtrotor (2.1)(2.2) eine Spulenanordnung (1.1.1)(1.1.2) zuzuordnen ist, mittels welcher er relativ in der Winkellage verstellbar ist.

10. Automatische Auswuchtvorrichtung für eine auszuwuchtende Komponente, im Wesentlichen umfassend eine mit konzentrischen, elektromagnetischen Spulenanordnungen ausgestattete Stator-Einheit und mindestens einen Auswuchtring, welcher zusammen mit einer Welle der auszuwuchtenden Komponente berührungsfrei gegenüber der Stator-Einheit rotiert und mindestens zwei unabhängig voneinander drehbar angeordnete und mit Kompensationsgewichten ausgestattete Auswuchtrotoren aufweist,
**dadurch gekennzeichnet, dass** die Stator-Einheit (1) eine geschlossene und eben gestaltete Oberfläche aufweist und einseitig axial gegenüber dem mindestens einen Auswuchtring (2) angeordnet ist, und die mindestens zwei Auswuchtrotoren (2.1)(2.2) des mindestens einen Auswuchtringes übereinander, mit unterschiedlichen Durchmessern gegenüber einer zugehörigen elektromagnetischen Spulenanordnung (1.1.1)(1.1.2) der Stator-Einheit (1) so angeordnet sind, dass Stator-Einheit (1) und Auswuchtring (2) eine kompakte und im Wesentlichen geschlossene Einheit bilden.

11. Verwendung einer Auswuchtvorrichtung gemäß einem der Ansprüche 1-10 zum automatischen Auswuchten von rotierenden Maschinen- und Bauteilen, insbesondere Schleifscheiben, unter Vermeidung von Beschädigungen der Vorrichtung durch Verschmutzung während des Betriebes.
